(19) Europäisches Patentamt
European Patent Office
Office européen des brevets

(11) Publication number: 0 359 510 A2

(12) # EUROPEAN PATENT APPLICATION

(21) Application number: 89309216.3

(22) Date of filing: 11.09.89

(51) Int. Cl.[5]: G 11 B 5/702
G 11 B 5/84

(30) Priority: 12.09.88 US 242931

(43) Date of publication of application:
21.03.90 Bulletin 90/12

(84) Designated Contracting States:
AT CH DE FR GB IT LI NL SE

(71) Applicant: AMPEX CORPORATION
401 Broadway M.S. 3-35
Redwood City California 94063-3199 (US)

(72) Inventor: Scott, Lawrence M.
6593 Flanders Drive
Newark California 94560 (US)

Curtis, John L.S.
Cannstatter Strasse 18
D-7500 Karlsruhe 41 (DE)

(74) Representative: Horton, Andrew Robert Grant et al
BOWLES HORTON Felden House Dower Mews High Street
Berkhamsted Hertfordshire HP4 2BL (GB)

(54) **Magnetic particle coating compositions and recording media.**

(57) This invention provides methods and compositions for reducing or eliminating undesired dimerization of ketone solvents in magnetic metal particle coating mixes used in the manufacture of magnetic recording media. The dimerization of ketone solvents, such as cyclohexanone, is reduced or eliminated by the use in the magnetic coating mix of an organic compound having two or more functional groups selected from carboxylic acid, sulfonate or phosphonate groups. The preferred organic compounds are difunctional, particularly dicarboxylic acids. The resulting magnetic media have improved properties, reduced solvent retention, and reduced odor.

EP 0 359 510 A2

## Description

This invention relates to the preparation and use of magnetic metal particle compositions in magnetic recording media such as tapes and discs.

### BACKGROUND OF THE INVENTION

In the manufacture of magnetic recording media, including tapes and discs, a coating composition or mix containing magnetic metal particles is applied to a base film, the coating is dried and/or cured to fix the magnetic metal particles on the base film. In some cases a topcoat is applied over the magnetic metal particle coating to protect metal particles from abrasion and physical damage when the magnetic recording media is used and/or to provide a lubricant on the recording media. In some cases, a back coat is applied to the back of the base film and in some cases a subcoat is applied to the base film before the magnetic metal particle coating is applied. This invention relates to the magnetic metal particles and to the recording media produced with the particles. Therefore this invention is useful in any type of recording media in which a coating of metal particles is formed for magnetically storing information.

The magnetic metal particle coating composition or mix usually comprises a solvent system containing the magnetic metal particles, a dispersant for the particles and a polymeric binder for fixing the metal particles on the base film to provide a magnetic recording layer. The mix is normally prepared by dissolving or mixing the binder in the solvent, dispersing the magnetic particles in the solvent with a dispersant, adding other additives such as lubricants, anti-static agents, abrasives, etc., and milling the mix, e.g., in a sand mill or ball mill, to evenly disperse the magnetic metal particles. The milled mix is applied to the base film in the form of a thin coating which is then dried to cure or fix the binder and to remove the solvents.

Examples of magnetic particle coating compositions and mixes are disclosed in U.S. patents 2,654,681 to Lueck; 3,144,352 to Talley; 3,647,539 to Weber; 3,205,092 to Rosenberg; 3,804,810 to Fryd; 4,431,604 to Sata et al.; 4,501,795 to Takeuchi et al.; 4,505,990 to Dasgupta; and 4,633,209 to Aonuma et al.

It is important in this manufacturing process that the solvent be essentially completely removed from the final recording media product, because any significant solvent remaining in the coating or on the base film can deteriorate the properties of the magnetic recording media. Excess solvent retention can interfere with the effectiveness of the binder, can plasticize the base film and can cause undesirable odors in the final recording media product.

A preferred class of solvents for use in the magnetic metal particle coating composition or mix are ketones, such as cyclohexanone, methyl isobutyl ketone and methyl ethyl ketone. A particularly preferred solvent is cyclohexanone. However, we have found that the ketone solvents, particularly cyclohexanone, tend to form dimers or other self-condensation products in the mix during the preparation and/or milling of the mix and/or during coating and curing the mix on the base film. We have found that when cyclohexanone dimers are present in any significant amount, such as more than about 0.1% or in some cases more than about 0.05% by weight based on the weight of the solvent present, a number of undesirable properties occur. Among those undesirable properties are solvent retention in the end product recording media, i.e., the cyclohexanone dimers appear to prevent sufficient removal of the solvent under desired media manufacturing conditions, which causes or contributes to undesirable odor in the media and decreased media performance. Apparently because of its higher molecular weight and lower volatility, the cyclohexanone dimers themselves are not removed with the solvent during the media drying and curing step, thereby also causing or contributing to the undesirable properties above and as follows. In addition, we have found that the cyclohexanone dimers also interfere with the effectiveness of the binder for the metal particles in the magnetic coating on the base film, which causes "shed", i.e., the undesirable property of the media shedding portions of the magnetic metal particles during use. The dimers can also interfere with the magnetic metal particle coating composition or mix by decreasing the pot life of the mix, i.e., the working time available from mixing the components together to coating the mix on the base film. The decreased pot life of the mix is believed to be at least in part due to the dimers causing accelerated curing of the binder and/or causing undesirable side reactions in the mix and in the coating before the mix can be applied and cured or dried to form the final metal particle coating on the base film. While the above discussion is primarily in reference to cyclohexanone, similar undesirable properties can result from the formation of dimers of other ketone solvents.

We have found that the use of certain difunctional or multifunctional compounds prevents self-condensation of ketone solvents and, consequently, avoids the undesired properties which result form such self-condensation of the ketone solvents.

### SUMMARY OF THE INVENTION

In one aspect, this invention is a method of treating oxidatively stabilized magnetic metal particles comprising mixing or otherwise contacting the stabilised particles with an organic compound having from 2 to

about 24 carbon atoms and having at least two functional groups selected from carboxylic acid, sulfonate or phosphonate groups, wherein the amount of said organic compound is an amount effective to deactivate the metal particles to thereby inhibit self-condensation of a ketone solvent in a magnetic coating mix.

In another aspect, this invention is a composition comprising oxidatively stabilized magnetic metal particles and an organic compound having from 2 to about 24 carbon atoms and having at least two functional groups selected from carboxylic acid, sulfonate or phosphonate groups wherein the organic compound is present in an amount effective to substantially deactivate the metal particles from causing dimerization of a ketone solvent in a magnetic coating mix.

In another aspect, this invention is a recording media comprising a substrate, such as a base film, and magnetic metal particles thereon, wherein the magnetic metal particles have (a) an oxide layer or a polymer coating thereon to oxidatively stabilize the metal particles and (b) an organic compound thereon having from 2 to about 24 carbon atoms and having at least two functional groups selected from carboxylic acid, sulfonate or phosphonate groups, wherein the amount of said organic compound thereon is at least about 0.2% by weight based on the weight of the particles.

The methods and compositions of this invention also provide improved magnetic coating mixes and improved recording media. Moreover, the methods and compositions of this invention reduce or effectively eliminate the formation of ketone solvent dimers and other ketone self-condensation products in magnetic coating mixes. By reducing or effecitvely eliminating the formation of those dimers and the like, a magnetic recording media product is obtained having improved properties such as reduced shed, reduced odor, and improved durability. In addition, the methods and compositions of this invention provide improved processes for manufacturing magnetic recording media, such as by extending the pot life or working time for the magnetic coating mix prepared for application to the base film. Other advantages and benefits of the methods and compositions of this invention will be apparent to one skilled in the art following the teachings of this disclosure.

## DESCRIPTION OF THE INVENTION

The methods and compositions of the present invention are described herein in terms of using a difunctional organic compound with magnetic metal particles to deactivate the magnetic metal particles to inhibit formation of dimerization products or other self-condensation products of cyclohexanone. Cyclohexanone is a common solvent used in magnetic metal particle coating compositions and mixes, but other ketones such as methyl ethyl ketone and methyl isobutyl ketone are useful as solvents and such magnetic metal particle coating compositions and mixes. Thus, it will be recognized by those skilled in the art that the methods, compositions and magnetic recording medium of the present invention, meeting the defined criteria in terms of cyclohexanone will also be useful in such magnetic coating compositions and mixes containing other ketone solvents alone or in mixture with cyclohexanone, and will be useful in reducing or eliminating self-condensation of other ketone solvents as well. The organic compound can contain two, three or more functional groups.

The magnetic metal particle compositions and coating mixes in accordance with the present invention include the mix, slurry or dispersion of magnetic metal particles and a solvent which comprises at least in part a ketone solvent of the type described above. It is further intended to include those compositions, mixes, slurries and dispersions in their various forms, namely, before milling, during milling, and after milling, as well as the wet coating applied to the base film.

The ketone solvents used in the magnetic metal particle coating compositions and mixes of this invention may be present in amounts up to about 80% by weight based on the total weight of the coating composition or mix. It is generally desirable to avoid the use of excess solvent due to the increased time and energy required to remove the solvent from the coating after it is applied to the base film. The solvent should generally be present in at least sufficient amount to dissolve or dilute the binder to the desired degree, provide the desired consistency or viscosity of the magnetic metal particle mix for coating on the base film, as well as solubilize or suspend the other additives and components present in the coating composition or mix. In general, the solvent will be present in at least about 40% by weight based on the weight of the coating composition or mix; preferably the solvent will be present between about 40% and about 80%, and more preferably between about 50% and about 70% by weight. Thus, the solids content of the mix preferably will be from about 20% to about 60% by weight. In addition, other solvents can be present in addition to the ketone solvent, such as toluene, tetrahydrofuran and other hydrocarbon solvents which are compatible with the ketone solvents, the binder systems and additives being used, and the base film on which the coating is to be applied. When other hydrocarbon solvents are present in the coating composition or mix, the ketone solvent will usually comprise at least about 10% by weight, preferably at least about 25%, and more preferably at least about 40% by weight based on the total weight of the coating composition or mix. A preferred ketone solvent for the method and composition of the present invention is cyclohexanone.

The magnetic metal particles useful in accordance with this invention are acicular particles, sometimes referred to as powders, which are known in the art for the manufacture of magnetic recording media. See Kirk-Othmer Encyclopedia of Chemical Technology, Vol 14, Third Edition, "Magnetic Tape", Perry et al., p. 732 at pp. 737-740 (1981). Magnetic metal particles useful in the invention provide superior performance compared

to magnetic metal oxide particles. However, metal particles in some forms can pose handling problems. For example, unless stabilized against oxidation, these metal particles are easily oxidized in air and in some cases tend to be pyrophoric. Therefore, unstabilized particles can be hazardous to handle unless they have been stabilized for use in an air environment, or unless they are used in an inert atmosphere or kept under liquid to prevent oxidation. Therefore, magnetic metal particles are conventionally stabilized against undesired oxidation in a number of different ways, including oxidizing the surfaces of the magnetic metal particles under controlled conditions to form a protective oxide layer on the surface of each particle, or coating the metal particles with a film or coating of a polymer to form a protective film or coating on the particles to provide some degree of oxidative stability. For example, see U.S. patents 3,520,676 to Stahr; 3,634,063 to Hwang; 3,892,673 to Ehrreich et al.; 4,113,528 to Tokuoka et al.; 4,197,347 to Ogawa et al.; 4,318,735 to Mishina et al., 4,420,330 to Jakusch et al,; and 4,505,990 to Dasgupta.

The magnetic metal particles useful in accordance with this invention are metal particles which are stabilized to some degree against oxidation in air. The stabilization can range from essentially complete stability in air at elevated temperatures to a slight degree of stability, e.g., sufficient to effectively protect the particles from exposure to air for short periods of time, such as during use in magnetic recording media manufacturing. The stabilized metal particles useful in accordance with this invention are preferably those that have been stabilized against oxidation with an oxide layer or with a polymer coating thereon to provide the desired degree of oxidative stability in an air atmosphere.

The organic compounds useful in accordance with the present invention are selected from carboxylic acids, sulfonates, or phosphonates, as well as mixtures thereof. While organic compounds having three or more such functional groups are useful in the practice of the present invention, normally it will be desirable to use difunctional compounds which are dicarboxylic acids, disulfonates or diphosphonates. The organic compounds useful in accordance with this invention can also include those compounds which contain a variety of at least two carboxylic acid, sulfonate, or phosphonate groups, for example, one carboxylic acid or sulfonate group and one phosphonate group, etc. The organic compounds useful in accordance with this invention may contain any backbone structure and other substituents or functional groups which are compatible with the magnetic metal particle coating compositions and mixes, the base film and other components of the magnetic recording media. In this regard, it is sometimes preferred that the organic compounds used according to this invention be free of ether linkages in the backbone thereof, particularly in the disulfonates.

Examples of dicarboxylic acid compounds useful in accordance with the present invention include oxalic acid, succinic acid, adipic acid, sebacic acid, maleic acid, decanedicarboxylic acids and the like. Examples of the difunctional sulfonates useful in accordance with the present invention include alpha-olefin sulfonate dimers, such as described in U. S. Patents 3,721,707 and 4,556,107. Examples of the difunctional phosphonates useful in accordance with the present invention include diamine diphosphonates, such as described in U. S. Patent 3,723,347. From these examples of difunctional acids, sulfonates and phosphonates, it will be apparent to one skilled that other multifunctional compounds containing two or more functional groups can be used in accordance with this invention. In some cases it may be desirable to use a polymeric compound having multiple carboxylic acid, sulfonate and/or phosphonate pendent groups thereon. However, it should be noted that it will usually be desired to use relatively low molecular weight polymeric compounds, so that they will be soluble in the mix solvent, compatible with the mix system and capable of deactivating the metal particles to the extent desired.

The organic compounds useful in accordance with the present invention should contain at least 2 carbon atoms, preferably from 2 carbon atoms to about 24 carbon atoms, more preferably from 2 carbon atoms to about 20 carbon atoms, and in some cases, most preferably between about 4 and about 16 carbon atoms.

It is believed that the multifunctional organic compounds used according to the present invention provide the desired reduction in ketone dimerization, because the multifunctional compounds are more strongly attracted to and/or attached to the magnetic metal particles than monofunctional compounds. By contrast, monofunctional organic compounds such as monocarboxylic acids and monosulfonates do not provide the desired degree of suppression or inhibition of ketone dimerization. This is believed due to the phenomenon that the monofunctional compounds are not attracted to and/or attached to the magnetic metal particles with sufficient strength to remain in place on or near the surface of the metal particles to provide the desired suppression or inhibition of dimer formation. However, the above theory or explanation is not to be considered as a limitation on the practice or usefulness of the present invention, but is offered herein as additional disclosure which may assist one skilled in the art in selecting various organic compounds for use in practicing the present invention in embodiments other than specifically described herein.

The amount of organic compound used with the magnetic metal particles according to the present invention will vary depending on the type of organic compound used, the particular magnetic metal particles used and the particular ketone solvent present in the coating composition or mix. In general, the amount of organic compound used must be at least an amount which is effective to substantially inhibit the formation of ketone dimers in the coating composition or mix, which is usually at least about 0.2% by weight based on the weight of the magnetic metal particles. The organic compound may be used at any desired level, but up to about 10% by weight based on the weight of the magnetic metal particles will usually be sufficient. Preferably, the organic compound will be present in amounts from about 0.2% to about 10%, more preferably between about 0.75% and about 7%, and most preferably between about 1% and about 5% by weight. While amounts of the difunctional organic compound in excess of about 10% by weight may be used, the economic benefit of such

high levels may be decreased.

In determining the effective amount of the organic compound to use, the procedure followed in the examples set forth hereinafter can be used. In general, it is desirable that the weight percent (based on the weight of the mix) of dimers or other ketone self-condensation products allowed to form in the coating composition or mix, be less than about 0.5%, preferably less than 0.3%, and most preferably less than about 0.2% in order for satisfactory recording media to be manufactured using the mix. In its most preferable embodiments, practice of the present invention inhibits formation of ketone dimers to levels which are essentially negligible, such as less than about 0.2%, preferably less than about 0.15% and most preferably less than 0.1%. The amount of ketone dimers which can be tolerated in the magnetic metal particle coating composition or mix will depend on the final properties desired for the media, which normally is determined by the use of the media. In some cases, a dimer level of about 0.2% may be tolerable; in other cases, a dimer level of less than about 0.1% will be desirable for optimum use media made in accordance with of the present invention. Usually the main criteria of finished product media performance will be durability and solvent retention properties of the media, which will determine the desired or required level which the ketone dimers should not exceed. Adjustment of the particular organic compound or the amount thereof to maintain the amount of dimers present below a selected maximum level and achieve the desired media properties will be apparent to one skilled in the art following the teachings and disclosure herein.

The above low levels of ketone dimers are achieved by practice of the methods and compositions in accordance with the present invention. The multifunctional organic compound may be used according to this invention to pretreat the magnetic metal particles or may be used as an additive in the magnetic metal particle coating composition or mix either before the mix is milled, during milling or, even after the mix is milled, provided that the organic compound is added to the mix before or at the same time the ketone solvent is added to the mix. Pretreatment of the magnetic metal particles with the organic compound may have certain advantages in some cases, and in other cases it may be desirable to add the organic compound to the mix after milling, such as when the mix is initially milled in a non-ketone solvent then diluted with a ketone solvent. In the practice of this invention, however, it is generally preferred for economic reasons and because in some cases more effective and efficient performance is obtained, to add the multifunctional organic compound to the magnetic metal particle coating composition or mix at the time the mix is formed and before it is milled to disperse the magnetic metal particles in a solvent containing a binder. However, in accordance with the invention, it is frequently more preferred to premix the multifunctional organic compound with the ketone solvent before the magnetic metal particles are introduced into the solvent to form the coating mix. The multifunctional organic compound useful in accordance with the present invention can be added as a liquid or, if the compound is a solid, it can be dissolved or dispersed in the mix or can be pre-dissolved in the ketone solvent or other solvent then added to the solvent or to the mix. The preferred or optimal method of using the multifunctional organic compound in a particular mix will be apparent to one skilled in the art following the teachings contained herein.

The following examples are set forth as illustrative flexible media embodiments of the present invention.

## EXAMPLE I

Stabilized magnetic iron metal particles having BET greater than 30 $m^2/g$ (such as those commercially available from Dowa Mining Co. Ltd., Tokyo, Japan) were pretreated in different sample quantities with the dibasic acids set forth in the following Table I by mixing the stated amount of acid (weight percent based on the weight of the metallic particles) with the metallic particles in an ethanol solution, which was then dried. The pretreated particles were then milled in cyclohexanone solvent for 1 hr. using a 1-pint media (sand) "quickee" mill. The milled mix contained 17% solids and 83% by weight cyclohexanone. Samples were made containing 0% to 4% acid. The wt% acid specified in Table 1 is based on the weight of the magnetic metal particles. Each milled metallic particle/cyclohexanone mix was stored for one week at room temperature after which the weight percent cyclohexanone dimers was measured. The results are set forth in the following Table 1.

Table 1

| Pretreating Agent | Wt % Acid | % Dimers |
|---|---|---|
| Control | 0 | 13.1 |
| Oxalic Acid (HOOC-COOH) | 1 | 6.2 |
| | 2 | 1.4 |
| | 4 | 0.2 |
| Succinic Acid ($HOOC-[CH_2]_2-COOH$) | 1 | 6.1 |
| | 2 | 0.5 |
| | 4 | 0.1 |
| Adipic Acid ($HOOC-[CH_2]_4-COOH$) | 1 | 6.3 |
| | 2 | 0.4 |
| | 4 | 0.08 |
| Sebacic Acid ($HOOC-[CH_2]_8-COOH$) | 1 | 4.4 |
| | 2 | 4.3* |
| | 4 | 0.02 |
| Maleic Acid (HOOC-CH=CH-COOH) | 1 | 2.94 |
| | 2 | 0.19 |
| | 4 | 0.07 |
| 1,10 Decanedicarboxylic Acid ($HOOC[CH_2]_{10}COOH$) | 1 | 2.35 |
| | 2 | 0.14 |
| | 4 | 0.01 |
| 1,12 Dodecanedicarboxylic Acid ($COOH[CH_2]_{12}COOH$) | 1 | 1.63 |
| | 2 | 0.12 |
| | 4 | 0.11 |

(*Value appears to have been an error in recording data; it appears from the other tests that the correct value may have been 0.43.)

## EXAMPLE II

In this example, the stabilized magnetic metal particles are the same as used in Example I, but were not pretreated. In this example the metal particles were milled in cyclohexanone solvent along with the indicated amount of acid (percent by weight based on the weight of the magnetic metal particles). The acid was added to the mix prior to the milling of the metallic particle-cyclohexanone slurry and was present during the entire milling step. Each slurry was milled in a 1-pint media "quickee" mill for 1 hour. As in Example I, each milled magnetic metal particle coating composition mix containing the cyclohexanone solvent was stored at room temperature for 1 week, then the amount of cyclohexanone dimers formed was measured. The results are set forth in the following Table 2.

Table 2

| Treating Agent | Wt % Acid | % Dimers |
|---|---|---|
| Control | 0 | 11.36 |
| Adipic Acid | 1 | 0.05 |
| | 2 | 0.09 |
| | 4 | 0.06 |
| Succinic Acid | 1 | 0.73 |
| | 2 | 0.20 |
| | 4 | 0.17 |

## EXAMPLE III

In this Example, two magnetic tape samples were prepared from the flexible media obtained from the two mixes of Example II which contained 0% acid and 1% adipic acid. These tape samples are designated in the following Table 3 as Tapes 1 and 2, respectively. Each mix was used to make the tape samples the same day the mix was made. The properties of the magnetic tape samples were measured. The results are set forth in the following Table 3.

Table 3

| | Tape 1 | Tape 2 |
|---|---|---|
| Electricals | | |
| At Saturated Output at 100 kfrpi (dB) | 10.2 | 10.7 |
| Modulation Noise (dB) | 51.9 | 52.9 |
| Tape Durability | Fail | Pass |
| % Dimers in Mix | 0.5 | 0.1 |
| Solvent Retention (microliters/$ft^2$) | 4.0 | 1.0 |

## EXAMPLE IV

For comparative purposes, Example II was repeated with a monobasic carboxylic acid and the following results obtained:

Table 4

| Treating Agent | Wt % Acid | % Dimers |
|---|---|---|
| Myristic Acid ($CH_3[CH_2]_{12}COOH$) | 0 | 15 |
| | 5 | 2.0 |
| | 20 | 0.7 |

## EXAMPLE V

Example II was repeated using the $C_{21}$ dicarboxylic acid "DA-1550" from Harima Chemicals, Inc., Osaka, Japan, which has the structural formula:

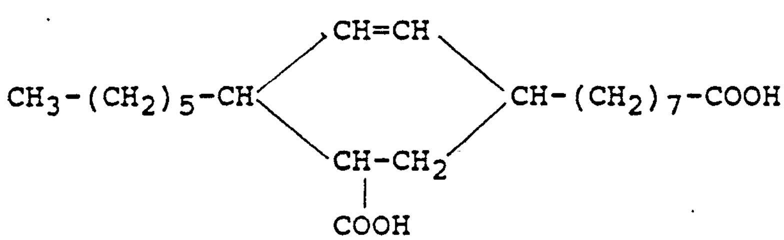

The results are set forth in Table 5:

Table 5

| Wt % Acid | % Dimers |
|---|---|
| 0 | 11.9 |
| 1 | 4.0 |
| 2 | 0.4 |
| 4 | 0.02 |

As can be seen from the above examples, the multifunctional organic compounds, as illustrated by dicarboxylic acids, are very effective in the practice of the present invention in that small amounts of these compounds can effectively eliminate the formation of cyclohexanone dimers and improve the quality of magnetic media products. By contrast, the monofunctional compounds are not effective for effectively eliminating the formation of ketone dimers. Similar superior results can be expected with other embodiments of the present invention employing other multifunctional organic compounds and other ketone solvents in accordance with the disclosure herein and in the scope of the following claims.

**Claims**

1. A method of treating oxidatively stabilized magnetic metal particles comprising mixing the stabilized particles and an organic compound having from 2 to about 24 carbon atoms and having at least two functional groups out of carboxylic acid, sulfonate and phosphonate groups, wherein the amount of said organic compound is an amount effective to deactivate the metal particles to thereby inhibit self-condensation of a ketone solvent in a magnetic coating mix.

2. A method according to claim 1, wherein the organic compound comprises a difunctional compound.

3. A method according to claim 2, wherein the organic compound comprises a dicarboxylic acid.

4. A method according to claim 3, wherein the amount of dicarboxylic acid is between about 0.2% and about 10% by weight based on the weight of the magnetic metal particles.

5. A method according to either claim 1 or claim 3, wherein the acid comprises at least one of oxalic, succinic, adipic, sebacic, maleic, a decanedicarboxylic,a dodecanedicarboxilic acid or a mixture of at least two thereof.

6. A method according to claim 1 wherein the organic compound is mixed with the stabilized magnetic metal particles to pretreat the particles and further comprising forming a magnetic coating mix containing the pretreated particles.

7. A method according to claim 1 wherein the organic compound is added to a magnetic coating mix containing the metal particles.

8. A method according to claim 1 comprising the steps of first mixing the organic compound and a ketone solvent then adding the stabilized magnetic particles to the mixture of the organic compound and ketone solvent.

9. A composition comprising oxidatively stabilized magnetic metal particles and an organic compound having from 2 to about 24 carbon atoms and having at least two functional groups out of carboxylic acid, sulfonate or phosphonate groups wherein the organic compound is present in an amount effective to deactivate the metal particles to thereby inhibit self-condensation of a ketone solvent in a magnetic coating mix.

10. A composition according to claim 9, wherein the organic compound comprises a difunctional compound.

11. A composition according to claim 10, wherein the organic compound comprises a dicarboxylic acid.

12. A composition according to claim 11, wherein the amount of dicarboxylic acid is between about 0.2% and about 10% by weight based on the weight of the magnetic metal particles.

13. A method according to either claim 9 or claim 11, wherein the acid comprises at least one of oxalic, succinic, adipic, sebacic, maleic, a decanedicarboxylic, a dodecanedicarboxylic acid, or a mixture of at least two thereof.

14. A composition according to claim 9 further comprising cyclohexanone.

15. A recording medium comprising a substrate; magnetic metal particles, wherein the magnetic metal particles have (a) an oxide layer or a polymer coating thereon to oxidatively stabilize the metal particles and (b) an organic compound thereon having from 2 to about 24 carbon atoms and having at least two functional groups selected from carboxylic acid, sulfonate or phosphonate groups; and a binder, in which said magnetic metal particles are dispersed, securing said magnetic metal particles to said substrate.

16. A recording medium according to claim 15, wherein said solvent is cyclohexanone.

17. A recording medium according to either claim 15 or claim 16, wherein the organic compound comprises a difunctional compound.

18. A recording medium according to claim 17, wherein the organic compound comprises a dicarboxylic acid.

19. A recording medium according to claim 18, wherein the amount of dicarboxylic acid is between about

0.2% and about 10% by weight based on the weight of the magnetic metal particles.

20. A recording medium according to either claim 15 or claim 18, wherein the acid comprises at least one of oxalic, succinic, adipic, sebacic, maleic, a decanedicarboxylic, a dodecanedicarboxylic acid, or a mixture of at least two thereof.